# EUROPEAN PATENT APPLICATION

(11) **EP 4 286 323 A1**
(43) Date of publication of application: **06.12.2023**
(21) Application number: 22745609.2
(22) Date of filing: 14.01.2022
(51) Int. Cl.: C01B 3/22, H01M 8/0606, H01M 8/0668, B01J 3/00

(54) **METHOD AND SYSTEM FOR CONTINUOUS PRODUCTION OF HYDROGEN**

(30) Priority: 27.01.2021 JP 2021011122
(71) Applicant: National Institute Of Advanced Industrial Science and Technology, Chiyoda-ku Tokyo 100-8921 (JP)
(72) Inventor: Kawanami Hajime, Tsukuba-shi, Ibaraki 305-8560 (JP)
(74) Representative: Gill Jennings & Every LLP
(86) International application number: PCT/JP2022/001081
(87) International publication number: WO 2022/163385

(57) **Abstract**

Provided are a method by which hydrogen can be continuously and efficiently produced through a dehydrogenation reaction of a formic acid solution even at a low concentration and/or low grade, and a system therefor. This method involves a reaction step for, while supplying formic acid, catalytically degrading the formic acid into carbon dioxide and hydrogen to thereby continuously produce hydrogen. This method is characterized by involving an extraction step for extracting formic acid from the formic acid solution serving as the starting material with the use of carbon dioxide obtained in the reaction step, and then supplying the formic acid to the reaction step.

## Description

### [Technical field]

The present invention relates to a method for continuously producing hydrogen by use of dehydrogenation reaction of formic acid, and a system therefor, in particular, a method for continuously producing hydrogen, in which not only low-concentration and/or low-quality formic acid can be used, but also high-pressure carbon dioxide can be supplied, and a system therefor.

### [Background Art]

When formic acid (HCOOH) is decomposed under an appropriate catalyst, hydrogen (H₂) and carbon dioxide (CO₂) can be selectively generated with almost no generation of carbon monoxide (CO). Such hydrogen and carbon dioxide can be separated by cooling a high-pressure mixed gas obtained to liquefy such carbon dioxide and separate such hydrogen as a high-pressure gas. (Hereinafter, formic acid: Formic Acid is sometimes designated as an abbreviation "FA".)

For example, Patent Document 1 discloses a method for producing a high-pressure hydrogen gas, the method including generating a high-pressure mixed gas having a total pressure of 20 MPa or more and 100 MPa or less and including hydrogen and carbon dioxide, from formic acid and a formic acid salt by dehydrogenation reaction using a specified catalyst, and subjecting the high-pressure mixed gas generated, to gas-liquid phase separation without dropping of the total pressure of the gas to 0.4 MPa or less, to produce a high-pressure gas high in hydrogen concentration.

### [Citation List]

### [Patent Document]

[Patent Document 1] Japanese Patent Application Publication No. 2016-124730

### [Summary of Invention]

### [Technical Problem]

Although formic acid can be decomposed to generate high-pressure hydrogen and carbon dioxide as described above, water as a medium of an aqueous formic acid solution remains in the reaction system after decomposition of formic acid provided in the form of an aqueous solution. Thus, continuous operating under addition of an aqueous formic acid solution causes accumulation of water in the reaction system to lead to dilution, finally resulting in stopping of the reaction. Although it is then considered to use high-concentration formic acid so that no water is generated, an increase in concentration of formic acid is technically difficult and leads to an increase in cost. On the other hand, use of more inexpensive low-concentration and/or low-quality formic acid causes a need for removal of a large amount of water contained in the reaction system.

The present invention has been made in view of the above circumstances, and an object thereof is to provide a method capable of continuously producing hydrogen efficiently even with a low-concentration and/or low-quality aqueous formic acid solution by use of its dehydrogenation reaction, and a system therefor.

### [Solution to Problem]

The method according to the present invention is a method for continuously producing hydrogen by use of dehydrogenation reaction of formic acid, the method comprising a reaction step of supplying formic acid and decomposing the formic acid, into carbon dioxide and hydrogen, with a catalyst, to continuously produce hydrogen, wherein said method further comprises an extraction step of extracting formic acid from a formic acid solution serving as a raw material, with the carbon dioxide obtained in the reaction step, and subjecting the extracted formic acid to the reaction step.

According to this feature, even in the case of a low-concentration and/or low-quality formic acid solution, its dehydrogenation reaction can be used to continuously produce hydrogen efficiently without any decrease in formic acid concentration in the reaction step.

In the above invention, a separation step of liquefying the carbon dioxide obtained in the reaction step to separate the carbon dioxide from hydrogen and also subject liquefied carbon dioxide or supercritical carbon dioxide to the extraction step is optionally comprised. According to this feature, hydrogen can be continuously produced efficiently, by use of dehydrogenation reaction of formic acid. In addition, high-pressure, liquefied, or supercritical carbon dioxide for various applications can be supplied.

In the above invention, the formic acid is optionally supplied to the reaction step by a carbon dioxide pressure in the separation step. The formic acid solution is optionally an aqueous formic acid solution. According to this feature, hydrogen can be continuously produced further efficiently by use of the dehydrogenation reaction of formic acid.

The system according to the present invention is a hydrogen production system for continuously producing hydrogen by use of the dehydrogenation reaction of formic acid, the system comprising a reaction section for supplying formic acid and decomposing the formic acid, into carbon dioxide and hydrogen, with a catalyst, to continuously produce hydrogen, wherein said system further comprises a formic acid extraction section for extracting formic acid from a formic acid solution serving as a raw material, with the carbon dioxide obtained in the reaction section, and subjecting the formic acid to the reaction section.

According to this feature, even in the case of even a low-concentration and/or low-quality formic acid solution, its dehydrogenation reaction can be used to continuously produce hydrogen efficiently without any decrease in formic acid concentration in a reaction step.

In the above invention, a separation section for liquefying the carbon dioxide obtained in the reaction section to separate the carbon dioxide from hydrogen, and subjecting liquefied carbon dioxide or supercritical carbon dioxide to the formic acid extraction section is optionally comprised. According to this feature, hydrogen can be produced efficiently by use of the dehydrogenation reaction of formic acid. In addition, high-pressure, liquefied, or supercritical carbon dioxide for various applications can be supplied.

In the above invention, the formic acid is optionally supplied to the reaction step by a carbon dioxide pressure in the separation step. According to this feature, hydrogen can be continuously produced further efficiently by use of the dehydrogenation reaction of formic acid.

### [Brief Description of the Drawings]

[Fig. 1] FIG. 1 is a block diagram illustrating the system according to the present invention.
[Fig. 2] FIG. 2 is a block diagram illustrating one portion of the system according to the present invention.

### [Description of Embodiments]

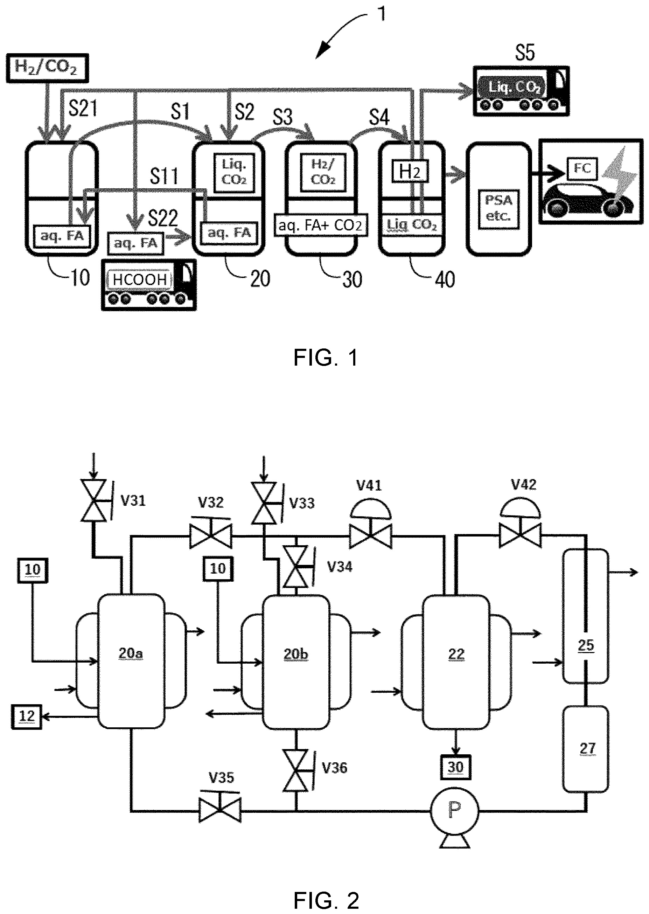

Hereinafter, one embodiment of the present invention will be described with reference to FIG. 1.

As illustrated in FIG. 1, a whole system 1 is configured from a formic acid production section 10, a formic acid extraction section 20, a formic acid reaction section 30, and a separation section 40, and these may not be necessarily always linked by piping.

In the formic acid production section 10, formic acid (FA) is synthesized from hydrogen obtained from modification of natural gas or petroleum-derived gas, hydrogen generated in any of various chemical product manufacturing processes, or hydrogen obtained from water, with carbon dioxide as a raw material. The solvent of the formic acid solution (FA Sol.) here obtained is preferably a hardly soluble solvent in carbon dioxide, such as water, polyethylene glycol, or an ionic liquid. Furthermore, the pressure of carbon dioxide as a raw material can be appropriately adjusted in the range of ordinary pressure (0.1 MPa) or more and 100 MPa or less at room temperature (25°C), and the pressure of hydrogen can be appropriately adjusted in the range of ordinary pressure (0.1 MPa) or more and 100 MPa or less at room temperature (25°C). Any solid catalyst or any complex catalyst can be appropriately used as the catalyst used in the production of formic acid in the formic acid production section 10, as long as it is a hardly soluble catalyst in supercritical carbon dioxide or liquefied carbon dioxide.

The formic acid solution (FA Sol.) obtained in the formic acid production section 10 can be delivered to the formic acid extraction section 20 by use of the pressure of high-pressure carbon dioxide obtained in and sent out of the separation section 40, or may also be delivered to the formic acid extraction section 20 separately by use of a mechanical pump (S1). The solution may also be packed and stored in a container once, then conveyed to a required place at a required time, and thereafter delivered to the formic acid extraction section 20. When the formic acid solution once stored is delivered, it can be delivered to the formic acid extraction section 20 by use of the pressure of high-pressure carbon dioxide obtained and prepared in the separation section 40, or may also be delivered to the formic acid extraction section 20 separately by use of a mechanical pump (S22).

Either the formic acid solution produced in the formic acid production section 10 or a formic acid solution separately synthesized is used in the formic acid extraction section 20. The formic acid solution, when is a formic acid solution having a formic acid concentration in the range from 0.1% to 80%, can be suitably used. The medium of the solution is preferably water, polyethylene glycol, or an ionic liquid.

The extraction medium used in the formic acid extraction section 20 is supercritical carbon dioxide or liquefied carbon dioxide (Liq. CO₂) at a pressure at least higher than ordinary pressure, and the extraction can be performed by selecting the temperature in the extraction in the range from a temperature equal to or more than 0°C at which water is frozen, to a temperature equal to or less than the temperature (107.2°C) corresponding to the azeotropic point of formic acid and water. Formic acid can be dissolved in carbon dioxide preferably at a temperature equal to or more than 0°C and equal to or less than 100.8°C corresponding to the boiling point of formic acid, most preferably, equal to or less than 100°C corresponding to the boiling point of water. Thus, only formic acid containing no water without any end can be supplied at a high purity to the formic acid reaction section 30.

When the catalyst used in the formic acid production section 10 is included in the remaining aqueous formic acid solution (aq. FA) after extraction of formic acid in the formic acid extraction section 20, such an aqueous solution can be returned to the formic acid production section 10 and the catalyst can be again recycled as a catalyst for formic acid production in the formic acid production section 10 (S1 1).

The carbon dioxide used in the formic acid extraction section 20 can be high-pressure carbon dioxide including a supercritical fluid or liquid added externally, in particular, at the initial of operation, or furthermore can be supercritical carbon dioxide or liquefied carbon dioxide obtained from the separation section 40 of the system 1, during operation (S2). Thus, continuous operation can be made with carbon dioxide being circulated.

In the formic acid reaction section 30, a carbon dioxide solution (FA Sol. + CO₂) of formic acid extracted in the formic acid extraction section 20 can be added under control to supply formic acid without addition of any water content into the reaction system (S3).

A high-pressure gas (H₂/CO₂) including hydrogen and carbon dioxide, obtained in the formic acid reaction section 30, is cooled through a heat exchanger (not illustrated) and then sent to the separation section 40 (S4).

The cooled high-pressure gas including hydrogen and carbon dioxide sent from the formic acid reaction section 30, is further cooled and separated into a gas and a liquid in the separation section 40. The gas separated is a hydrogen-rich gas and the liquid separated is a carbon dioxide-rich liquid. The carbon dioxide-rich liquid contains 50% by volume or less of hydrogen in theory, and the concentration adopted can be any concentration, preferably 4% by volume or less for safety, and furthermore preferably 1% by volume or less.

The carbon dioxide-rich liquid (Liq. CO₂) obtained in the separation section 40 not only cools the high-pressure gas obtained in the formic acid reaction section 30, through a heat exchanger (not illustrated), but also can be used in the form of a liquid in various applications.

For example, such a liquid may be packed and stored in a cylinder for carbon dioxide for a general purpose or depending on the object, conveyed to a required place at a required time, and used in various applications (S5). Specifically, liquefied carbon dioxide can be compressed by a press machine and thus formed into dry ice, and used for various cooling agents. Liquefied carbon dioxide can also be mixed with any of various polymer materials and then used as a foamer, or a dye or the like can also be dissolved and then used for dyeing a fiber or a cloth. Liquefied carbon dioxide can also be appropriately used in degreasing and/or surface treatment in plating, washing with dry ice by use of dry ice generation due to adiabatic expansion, sterilization by use of high pressure, an extraction solvent for natural products, a medium for analytical equipment such as chromatography, painting or coating with carbon dioxide as a sub solvent, a digestive apparatus, a shield gas for arc welding, a dry detergent, various medical applications, food applications, and the like. Liquefied carbon dioxide can also be adiabatically expanded, and then used in the cooling of a cooling medium, or then formed into dry ice and used for a heat exchanger, or then recovered in the form of energy as power by rotation of a turbine. In addition, carbon dioxide at a low pressure or a pressure close to ordinary pressure after use can also be used in, for example, promotion of plant growth in a plant factory or a vinyl greenhouse, synthesis of oils by providing carbon dioxide to microalgae, and synthesis of chemical products such as cement raw material, calcium carbonate, and alcohol.

One portion of the carbon dioxide-rich liquid (Liq. CO₂) obtained in the separation section 40 is delivered to the formic acid extraction section 20 as it is and used as the extraction medium of formic acid (S2), as described above. Furthermore, the total amount or one portion of the carbon dioxide-rich liquid (Liq. CO₂) can also be delivered to the formic acid production section 10, and reused as a raw material of carbon dioxide in formic acid production (S21).

Furthermore, the carbon dioxide-rich liquid (Liq. CO₂) obtained from the separation section 40, if heated, can increase the pressures of various apparatuses, and thus can be used for a pressurizing operation necessary for delivery of various solutions in the system 1 as described above.

Furthermore, one further specific embodiment of the present invention is described with reference to FIG. 1 and FIG. 2. Herein, valves V31 to 36, and liquid measure adjustment valves V41 and 42 are closed in the initial state.

In the formic acid production section 10 (see FIG. 1), an aqueous solution in which a catalyst is dispersed or dissolved is placed in a batch-type container, and hydrogen and carbon dioxide serving as raw materials of formic acid are introduced at a ratio ranging from 1:1 to 1:5. The total pressure is set to 0.1 MPa to 35 MPa, and carbon dioxide obtained in the separation section 40 is appropriately added and not only used in a raw material, but also used in pressure adjustment.

Thereafter, the resultant is stirred with the temperature being adjusted in the temperature range from 0°C to 100°C, the concentration is confirmed under sampling to reach a predetermined formic acid concentration (0.1% to 80%), and thereafter the resultant is transferred to container(s) (20a and/or 20b of FIG. 2) of the formic acid extraction section 20. The pressure of hydrogen and carbon dioxide introduced into the system (container) of the formic acid production section 10 can be used for this transfer, and the shortfall thereof can also be obtained by pressurizing with the liquefied carbon dioxide obtained in the separation section 40.

When the container of the formic acid production section 10 has sufficient pressure resistance, not only the liquefied carbon dioxide or supercritical carbon dioxide obtained in the separation section 40 can be directly injected to the container to produce formic acid, but also formic acid can be extracted in the same manner as in the formic acid extraction section 20, without the above transfer to the formic acid extraction section 20.

FIG. 2 illustrates the detail of the formic acid extraction section 20. First, a solution containing formic acid (as described above, the concentration of the formic acid content is here 0.1% to 80%) in the formic acid extraction section(s) 20a and/or 20b, delivered from the formic acid production section 10, is adjusted with respect to the degree of acidity. When the solution is approximately basic or neutral, an acid (hydrochloric acid or sulfuric acid) is added for adjustment to acidity (pH 1 to 2).

Thereafter, the valve(s) V31 and/or V33 are/is opened, and liquefied carbon dioxide or supercritical carbon dioxide is introduced through the separation section 40 to the container(s) of the formic acid extraction section(s) 20a and/or 20b (S2 in FIG. 1), to adjust the total pressure in the pressure range from 0.1 MPa to 100 MPa. Here, V35 and/or V36 may be opened to deliver and introduce carbon dioxide with a pump P, according to or instead of introduction of carbon dioxide from the separation section 40. While the temperature is adjusted in the range from room temperature to around 100°C near the boiling point of formic acid, formic acid contained in the solution is extracted.

As in the example here, a certain time is taken until a steady state is achieved in formic acid extraction, and thus a plurality of (two or more) such formic acid extraction sections 20 are preferably provided for an increase in extraction efficiency, as in the formic acid extraction sections 20a and 20b.

When extraction of formic acid by carbon dioxide progresses and a steady state is obtained, the valves 31, V33, V35, and V36 are closed and also valve(s) V32 and/or V34 are/is opened, and furthermore V41 is opened to deliver formic acid extracted, to the formic acid storage section 22, at a pressure lower than that of the formic acid extraction section 20a and/or formic acid extraction section 20b. In the formic acid storage section 22, the pressure is lower than the extraction pressure, and thus the solubility of formic acid in carbon dioxide is changed and separation into formic acid concentrated and carbon dioxide is made. The formic acid concentrated in the formic acid storage section 22 and collected below is delivered to the formic acid reaction section 30 by any method, or stored once in the container, and then conveyed and introduced into the formic acid reaction section 30 (S3 in FIG. 1). The carbon dioxide separated is cooled in a heat exchanger 25 at a predetermined pressure being kept with opening of V42, and recovered as liquid carbon dioxide and stored in a carbon dioxide storage tank 27. Thereafter, as described above, the carbon dioxide in the carbon dioxide storage tank 27 is again delivered by the pump P to the formic acid extraction section 20a and/or the formic acid extraction section 20b, and then repeatedly utilized.

After formic acid is sufficiently extracted in the formic acid extraction section 20 (20a, 20b), the remaining aqueous catalyst-containing solution is recovered in a catalyst-containing solution recovery tank 12, and is again sent to the formic acid production section 10, and recycled. Alternatively, the catalyst is recovered and processed, and discharged as a waste liquid.

Thereafter, in the formic acid reaction section 30, the catalyst is placed in an aqueous formic acid solution and is reacted with the temperature being set in the range from, for example, 30°C to 100°C. The resulting high-pressure gas of hydrogen and carbon dioxide is cooled in a heat exchanger not illustrated, and introduced into the separation section 40 consisting of a gas-liquid separation tank.

In the separation section 40, the high-pressure gas is cooled and carbon dioxide is liquefied and separated from hydrogen being gas. The carbon dioxide liquefied (Liq. CO2) is stored through a liquid measure adjustment valve into a liquefied carbon dioxide storage section, and is appropriately utilized.

As described above, even carbon dioxide obtained by formic acid decomposition, which has been conventionally low in utility value, can be used in formic acid production and the like, furthermore the resulting low-quality and/or low-concentration extraction medium of formic acid can also be utilized, and not only continuous hydrogen production with no change in any concentration of an aqueous formic acid solution, but also production of high-pressure carbon dioxide can be made possible.

While representative embodiments of the present invention, and variations based thereon are described above, the present invention is not necessarily limited thereto. Various alternative examples could be found by those skilled in the art, without departing from the attached claims.

### [REFERENCE SIGNS LIST]

1 system
10 formic acid production section
20 formic acid extraction section
20a first formic acid extraction section
20b second formic acid extraction section
22 formic acid storage section
25 heat exchanger
27 carbon dioxide storage tank
30 formic acid reaction section
40 separation section

## Claims

1. A method for continuously producing hydrogen by use of dehydrogenation reaction of formic acid, the method comprising:
a reaction step of supplying formic acid and decomposing the formic acid into carbon dioxide and hydrogen with a catalyst to continuously produce hydrogen, wherein said method further comprises an extraction step of extracting formic acid from a formic acid solution serving as a raw material, with the carbon dioxide obtained in the reaction step, and subjecting the extracted formic acid to the reaction step.

2. The method for continuously producing hydrogen according to claim 1, further comprising a separation step of liquefying the carbon dioxide obtained in the reaction step to separate the carbon dioxide from hydrogen and subject liquefied carbon dioxide or supercritical carbon dioxide to the extraction step.

3. The method for continuously producing hydrogen according to claim 2, wherein the formic acid is supplied to the reaction step by a carbon dioxide pressure in the separation step.

4. The method for continuously producing hydrogen according to any one of claims 1 to 3, wherein the formic acid solution is an aqueous formic acid solution.

5. A hydrogen production system for continuously producing hydrogen by use of dehydrogenation reaction of formic acid, the system comprising:
a reaction section for supplying formic acid and decomposing the formic acid into carbon dioxide and hydrogen with a catalyst to continuously produce hydrogen; wherein said system further comprises a formic acid extraction section for extracting formic acid from a formic acid solution serving as a raw material, with the carbon dioxide obtained in the reaction section, and subjecting the formic acid to the reaction section.

6. The hydrogen production system according to claim 5, further comprising a separation section for liquefying the carbon dioxide obtained in the reaction section to separate the carbon dioxide from hydrogen and subjecting liquefied carbon dioxide or supercritical carbon dioxide to the formic acid extraction section.

7. The hydrogen production system according to claim 6, wherein the formic acid is supplied to the reaction section by a carbon dioxide pressure in the separation section.
